# EUROPEAN PATENT APPLICATION

(11) **EP 2 843 290 A2**
(43) Date of publication of application: **04.03.2015**
(21) Application number: 14182661.0
(22) Date of filing: 28.08.2014
(51) Int. Cl.: F17C 13/00

(54) **Storage tank suspension member and storage tank for storage of cryogenic liquid**

(30) Priority: 30.08.2013 GB 201315482
(71) Applicant: UBH International Limited, Ormskirk, Lancashire L40 0SL (GB)
(72) Inventor: Himbury, Michael John, Ormskirk, Lancashire L40 0SL (GB)
(74) Representative: Tindall, Adam

(57) **Abstract**

A suspension member (100) of a cryogenic storage tank (500), wherein the cryogenic storage tank (500) comprises an inner tank (510) and outer tank (520). The inner tank (510) is suspended within the outer tank (520) by means of one or more suspension members (100) which extend between the inner (510) and outer tank (520). The or each suspension member(s) (100) comprise a plurality of fibres (110) which are aligned along an elongate axis of the suspension member.

## Description

The present disclosure relates to a suspension member of a cryogenic storage tank.

### BACKGROUND

US 7757882 describes a tank for storage of liquid hydrogen, where the tank has an inner tank for storage of cryogenic liquid suspended within an outer tank. The opposing ends of the inner tank are suspended from the outer tank by means of suspension members which limit heat transfer between the inner and outer tank. It is disclosed that the suspension members can comprise woven materials, such as carbon fibre, Kevlar (RTM) or the like. Such materials are effective in limiting heat transfer due to their relatively low heat transfer coefficient. The woven material of the suspension material is joined at the ends to form a loop. A plurality of the loops are secured between a first roller on the inner tank and a second roller on the outer tank.

With such an arrangement the woven material has to be joined to form a loop, and a relatively bulky and complicated roller arrangement is required. It is desirable to limit the amount of material in such an attachment to reduce heat transfer.

It is an object of the device of the device and method of present disclosure to provide an improved cryogenic storage tank, which solves one of the above or other problems.

### SUMMARY

According to the present invention there is provided apparatus and methods as set forth in the appended claims. Other features of the invention will be apparent from the dependent claims, and the description which follows.

There may be provided a suspension member of a cryogenic storage tank, the suspension member being configured to extend between a portion of an inner tank and a portion of an outer tank of the cryogenic storage tank to thereby suspend a portion of the inner tank within the outer tank, wherein the suspension member comprises a plurality of fibres which are aligned along an elongate axis of the suspension member.

Since the fibres are aligned to the elongate axis of the suspension member, rather than woven as a cord as disclosed in the prior art, the axial strength of the fibres are optimised for a given weight of material. In this way the amount of material for a given strength is reduced, and therefore the rate at which the suspension member transfers heat between the inner and outer tank is reduced.

The fibres are aligned to each other and not woven together to form a cord.

The suspension member may comprise attachment means suitable for attaching the fibres to the inner tank and outer tank. The attachment means may comprise a first and second attachment member, the first attachment member attaching a first end of the fibres to the inner tank, and the second attachment member attaching a second end of the fibres to the outer tank.

The first and / or second attachment member may comprise a self-tightening attachment. The self-tightening attachment may comprise a wedge and tapered passageway which is complimentary in shape to the wedge, wherein the fibres are arrangeable between the wedge and tapered passageway such that a tensile force applied to the fibres causes the wedge to be urged towards the tapered passageway.

The wedge and tapered passageway may be configured such that the fibres can be uniformly distributed between the wedge and tapered passageway. In this way the efficiency of the attachment member is maximised for a given weight. Consequently, less material can be used in the attachment member such that the rate at which the suspension member transfers heat between the inner and outer tank is reduced.

The tapered passageway may be formed through a body, the body having a mouth, through which the fibres are insertable into the tapered passageway.

The body may be connectable to a mounting member by means of an axially adjustable attachment. Advantageously, the axial adjustable attachment can be used to adjust the tension in the suspension member and / or the axial length of the suspension member. The axial adjustment may comprise a threaded connection. The axial adjustment may comprise a coupling threadably connectable to the body and mounting member, wherein the threadable connection comprises a first connection between the coupling and body having threads in a first direction, and a second connection between the coupling and mounting member having threads in a second direction. The first direction may, for example, comprise an anti-clockwise thread and the second direction may comprise a clockwise thread. In this way rotation of the coupling causes the axial distance between the body and mounting member to decrease or increase depending on the direction of rotation.

The mounting member may be attachable to the inner or outer tank by means of a further attachment. The further attachment may comprise a plate on the mounting member or inner/outer tanks, the plate being insertable into a slot in the other of the mounting member or inner/outer tank, and being securable by a pin through an aperture that extends through both the slot and plate.

The fibres may comprise a non-metallic fibre, for example Kevlar (RTM) or other suitable para-aramid. The fibres may be 0.001 mm to 0.1 mm in diameter. The fibres may be 20cm - 2m in length.

The plurality of fibres may be arranged in a bundle which is substantially circular in cross-section, and has a diameter which is about 15mm. The plurality of fibres may extend from the first attachment member to the second attachment member. The bundle may extend a distance of substantially 300mm between the first and second attachment member.

The wedge may be substantially conical or frustoconical in shape. The distance between a tip and a rear face of the wedge may be between 25 - 400mm. The distance between a tip and a rear face of the wedge may about 150mm. The surface of the wedge may be inclined at less than 30º to the elongate axis. A centreline of the wedge may be aligned to the elongate axis. The tapered passageway may have a surface which is inclined to the elongate axis at substantially the same angle as the surface of the wedge.

The wedge, body and mounting member may be composed from a metal such as stainless steel or aluminium.

There may also be provided a method of assembling a suspension member of a cryogenic storage tank, the suspension member being configured to extend between a portion of an inner tank and a portion of an outer tank of the cryogenic storage tank, to thereby suspend a portion of the inner tank within the outer tank, wherein the method comprises a step of: arranging a plurality of fibres such that they are aligned along an elongate axis of the suspension member.

The method may include a step of attaching an attachment member to a first and / or second end of the fibres, wherein the attachment member preferably comprises a self-tightening attachment. The method may also include a step of attaching the self-tightening attachment by inserting the plurality of fibres through a mouth of a body of the attachment and into a tapered passageway, thereafter a wedge is inserted into an opposite end of the body, and is pressed towards the tapered passageway with the fibres arranged between the tapered passageway and the wedge.

There may also be provided a cryogenic storage tank comprising an inner tank and outer tank, wherein the inner tank is suspended within the outer tank by means of one or more suspension members which extend between the inner and outer tank, wherein the or each suspension member(s) comprise a plurality of fibres which are aligned along an elongate axis of the suspension member.

The inner and / or outer tank may be substantially cylindrical.

The or each suspension member(s) may be arranged to extend in a radial direction from the inner tank to the outer tank.

A first group of suspension members may extend from a first end of the inner tank to the outer tank. A second group of suspension members may extend from a second end of the inner tank to the outer tank. Alternatively, the second end of the inner tank is connected to the outer tank by means of a trunnion which extends from the inner tank into a trunnion support of the outer tank. The trunnion support and trunnion may be co-axial about the central axis of the cryogenic tank.

The first and / or second group may comprises three, four or more suspension members.

The suspension members may extend from proximate a central axis of the inner tank. The suspension members may extend from a co-axial trunnion, which extends outwardly from the first and / or second end of the inner tank. The suspension members may extend from a side wall of the outer tank.

The cryogenic storage tank may be for storage of liquid at about 0 - 100 Kelvin. The cryogenic storage tank may be for storage of liquid hydrogen or liquid helium. It will be appreciated that in use the tank may store fluid in liquid and gaseous states depending on the temperature and pressure.

The inner tank may be operable to store about 5 to 60 thousand litres of fluid. The inner tank may be about 2 to 12 metres in length and about 2 to 3 metres in diameter. The outer tank may be about 3 to 13 metres in length and about 2.25 to 3.25 metres in diameter.

There may also be provided a method of assembling a cryogenic storage tank comprising an inner tank and outer tank, wherein the method comprises arranging one or more suspension members to extend between the inner and outer tank to thereby suspend the inner tank within the outer tank, wherein the suspension members are assembled in accordance with a method of the present disclosure as herein described.

All of the features described herein may be combined with any of the above aspects, in any combination.

### BRIEF DESCRIPTION OF THE DRAWINGS

For a better understanding of the apparatus and method present disclosure, and to show how examples of the same may be carried into effect, reference will now be made, by way of example, to the accompanying diagrammatic drawings in which:
Figure 1 shows a perspective view of a suspension member of a cryogenic storage tank according to an example of the present disclosure;
Figure 2 shows a close-up sectional view of part of the suspension member of figure 1;
Figure 3 shows a perspective view of a cryogenic storage tank comprising the suspension members of figure 1, wherein a portion of an outer tank is cut away for illustrative purposes;
Figure 4 shows a sectional view of part of an alternative suspension member to that shown in figure 1;
Figure 5 shows a side view of the cryogenic storage tank of figure 3; and
Figure 6 shows a side view of an end of the cryogenic storage tank of figure 3 comprising an alternative means for connecting an inner and outer tank of the cryogenic storage tank.

### DETAILED DESCRIPTION OF THE EXEMPLARY EXAMPLES

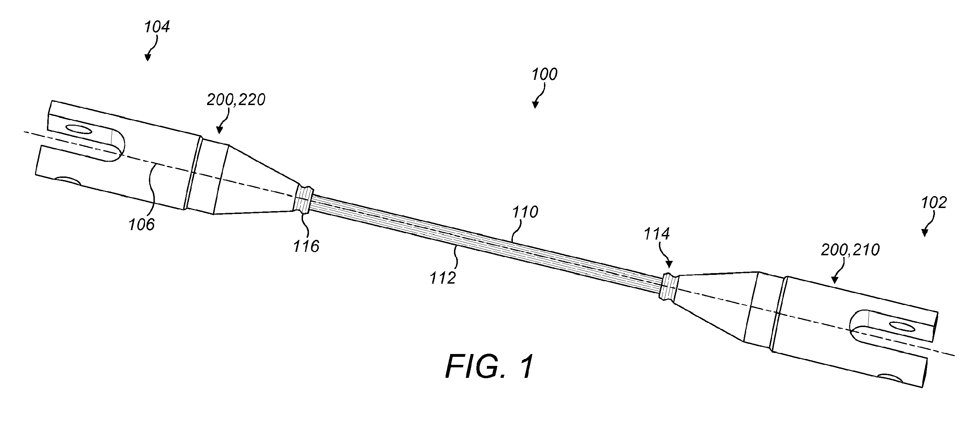

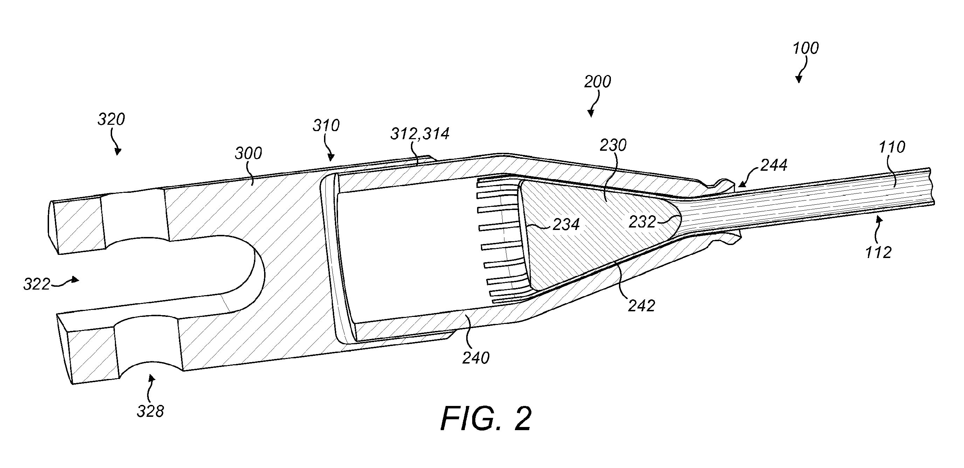

Figures 1 and 2 show a suspension member 100 of a cryogenic storage tank 500 which is shown in later figures. The suspension member 100 has a first end 102 and second end 104 which are arrangeable to extend between an inner 510 and outer tank 520 of the cryogenic storage tank 500, thus supporting the inner tank within the outer tank, as will be discussed in more detail in the following.

However, initially considering the suspension member 100 in detail, there is provided a plurality of fibres 110 which are arranged such that they are aligned to each other along a central axis 106 to form a bundle 112.

In this example the bundle is substantially circular in cross-section, with a diameter of about 15mm, and an exposed length of about 300mm. However, it will be appreciated that the length will vary depending on the overall geometry of the cryogenic tank 500 the suspension member 100 is intended for use with. It will also be appreciated that a circular cross-section is not essential to the device of the present disclosure.

In this example there are approximately 1,000 to 1,000 million fibres in the bundle, with each fibre being substantially circular in cross-section and having a diameter of about 0.001mm to 0.1mm. It will be appreciated that fibres with a circular cross-section are not essential to the device of the present disclosure.

The fibres 110 comprise a non-metallic material, which in this example is Kevlar (RTM), although it will be appreciated that any other suitable material, such as a para-aramid, can be used.

Attachment means 200 in the form of a first 210 and second 220 attachment member are attached to respective first 114 and second 116 ends of the bundle. That is to say, the plurality of fibres 110 extend from the first attachment member 210 to the second attachment member 220. In this example the first and second attachment member 210, 220 comprise a self-tightening attachment, having a wedge and tapered passageway which are discussed in more detail in the following. However it will be appreciated that other suitable attachment means may be used.

As best seen in figure 2, the self-tightening attachment comprises a wedge 230 and tapered passageway 242, which extends through a body 240. The tapered passageway 242 is complimentary in shape to the wedge 230. In this particular example the wedge is conical in shape, although it will be appreciated that this is not essential to the device of the present disclosure, for instance, the wedge may be pyramid or frustoconical in shape. Accordingly, in this example the passageway 242 is conical such that it is complementary to the shape of the wedge. Both the wedge 230 and passageway 242 are arranged such that their centreline is aligned to the central axis 106.

The body 240 comprises a mouth 244, through which the fibres 110 of the bundle 112 extend into the passageway 242. The tapering of the wedge 230 is arranged such that the tip 232 of the wedge is closer to the mouth 244 than the rear face 234 of the wedge. The fibres 110 extend around the wedge 230 such that they are positioned between the wedge 232 and the passageway. The plurality of fibres 110 extend between the bodies 240 at either end of the suspension member 100, and thus extend from the first attachment member 210 to the second attachment member 220. Due to friction between the fibres 110 and wedge 230, when a tensile force is applied to the fibres 110, the wedge is drawn towards the surface of the tapered passageway 242. This causes the wedge 232 to clamp the fibres against the surface of the passageway 242 such that the tensile force is resisted. Such an attachment of fibres is advantageous since tensile force in the fibres 110 can be uniformly transferred to the body 240 of the attachment member 210, 220. Furthermore, the attachment is easy to assemble and uses minimal material.

The diameter of the wedge 230 and tapered surface 242 are selected such that the fibres can be uniformly distributed between the wedge and tapered passageway. In this way the efficiency of the attachment member is maximised for a given weight. Consequently, less material can be used in the attachment member such that the rate at which the suspension member 100 transfers heat between the outer tank 520 and inner tank 510 is reduced.

In this example a portion of the body 240 distal from the mouth 244 is connected to a mounting member 300 by means of an axially adjustable attachment 310. The axially adjustable attachment 310 can be used to adjust the tension in the suspension member 100 when assembled on the cryogenic tank 500 by adjusting the axial length of the suspension member, and / or to adjust the axial length of the suspension member 100 prior to attachment to the tank 500.

In this example the axially adjustable attachment 310 comprises a female thread 312 on the mounting member 300 that is threadably engaged with a male thread 314 on the body 240. It will be appreciated that in other examples other attachment means can be provided, and, for example, the male thread can alternatively be on the mounting member and the female thread on the body.

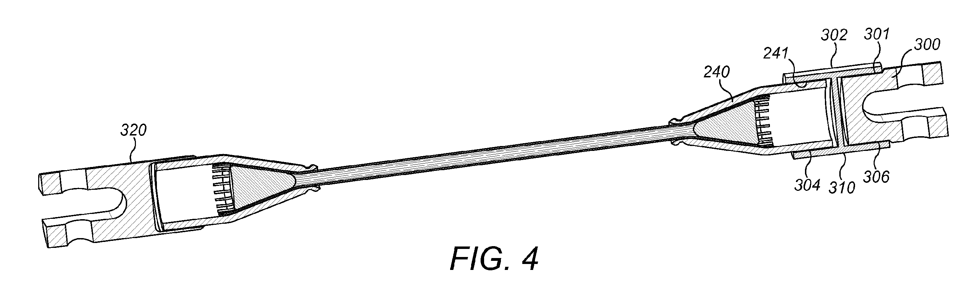

Figure 4 shows an exemplary arrangement for providing axial adjustment of the suspension member. In this example a coupling 302 interconnects the body 240 and mounting member 300. The coupling 302 comprises a female right hand thread portion 304 and a female left hand thread portion 306. The female right hand thread portion 304 is threadably engaged with a male right hand thread 241, and the female left hand thread portion 306 is threadably engaged with a male left hand thread portion 301. Accordingly rotation of the coupling 302 causes the distance between the body 240 and mounting member 300 to increase or decrease depending on the direction of rotation. It will be appreciated that the arrangement shown in figure 4 could be applied to one or both ends of the suspension member.

A further attachment 320 is positioned on the mounting member 300 at an end distal from the axially adjustable attachment 310. The attachment 320 connects the suspension member 100 at the first end 102 to the inner tank 510. The plurality of fibres 110 extend between the bodies 240 at either end of the suspension member 100, and thus extend from attachment member 310 at one end of the suspension member 100 to the other attachment member 320 at the other end of the suspension member.

The equivalent attachment 320 is also provided to connect the second end 104 to the outer tank 520. In this example the attachment 320, as best seen in figures 2, 3 and 5, comprises a slot 322 in the mounting member 300 configured to receive a plate 324 positioned on the inner or outer tank. The plate 324 is secured in the slot 322 by means of a pin 326 which is positioned in an aperture 328 which extends through the plate and slot. It will be appreciated that this is one example configuration of attachment, and that other suitable configurations may be used.

To assemble the suspension member 100, it will be appreciated that the fibres are arranged such that they are aligned along the axis 106 to form the bundle 112. Thereafter, the first end 114 of the bundle is inserted into the mouth 244 of the first attachment member 210. The wedge 230 is next inserted into the passageway 242 from the distal end of the body 240. The wedge 230 is pressed towards the tapered passageway 242 and the fibres 110 are arranged such that they are trapped, with a uniform distribution, between the wedge 230 and passageway 242. The body 240 and bundle 112 are retained under a nominal amount of tension such that the wedge 230 remains engaged upon the fibres 110 in the passageway 242. The above process can then be repeated for the second end 116 of the bundle 112.

The bodies 240A, B of the first 102 and second 104 end of the suspension member 100 are then attached to a first and second mounting member 300 by means of the associated axially adjustable attachments 310. The axially adjustable attachment 310 may then be used to set the desired length of the suspension member 100.

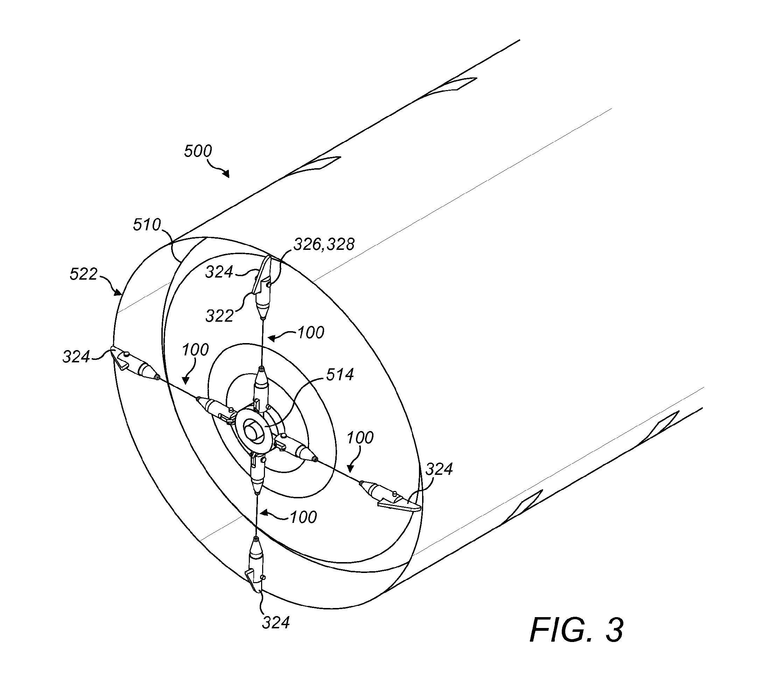

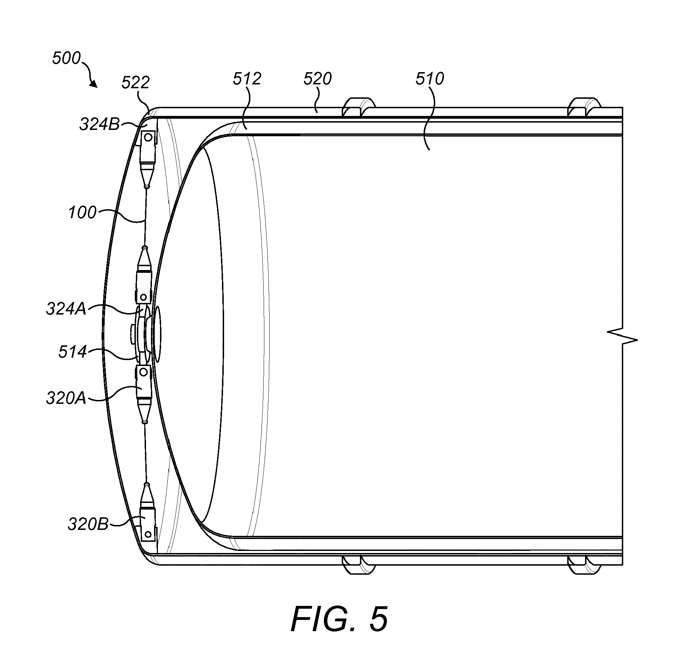

The assembled suspension member 100 is thereafter attached to the inner and outer tank. This is achieved by connecting the first end of the suspension member 100 to the inner tank 510 through a trunnion 514 by the attachment 320A, and connecting the second end of the suspension member 100 to the outer tank 520 by the attachment 320B. The process can be repeated such that a plurality of suspension members extend from the inner tank 510 to the outer tank 520, as shown in figures 3 and 5. In this example four suspension members 100 are shown, however it will be appreciated that any suitable number of suspension members 100 can be used.

In the example shown the first end 102 of the suspension member 100 is positioned at a first end 512 of the inner tank 510. The first end 102 comprises the trunnion 514, from which the plate 324A of the attachment 320 extends. The trunnion 514 is positioned co-axially to a central axis 502 of the cryogenic storage vessel 500 and extends outwardly from the inner tank 510. However, it will be appreciated that the suspension member may alternatively or additionally extend from the side wall of the inner tank 510.

In the example shown, and as best seen in figure 5, the second end 104 of the suspension member 100 is connected to a toroidal surface 522 formed between the side and end wall of the outer tank 520. More particularly, the plate 324B of the attachment 320 extends from the toroidal surface 522.

In the example shown the first end 512 of the inner tank 510 comprises a first group of suspension members 100. The second end 516 (not shown) may also comprise a second group of suspension members, which have the same/similar arrangement as those at the first end 512.

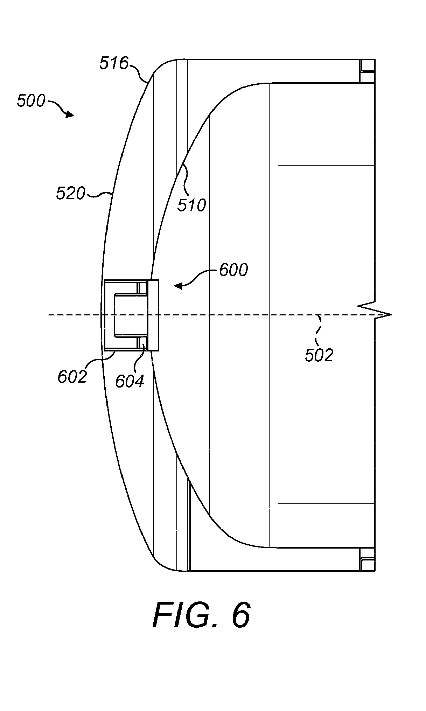

Alternatively, the second end 516 may be connected as shown in figure 6. In this example a trunnion 600 which extends outwardly from the second end 516, and is coaxial the central axis 502, is supported by a trunnion support 602 on the outer tank 520. An insulating member 604 is positioned between the trunnion 600 and trunnion support 602 to limit heat transfer.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The device and method of the present disclosure is not restricted to the details of the foregoing example(s). The device and method of the present disclosure extends to any novel one, or any novel combination, of the features disclosed in this specification (including any accompanying claims, abstract and drawings), or to any novel one, or any novel combination, of the steps of any method or process so disclosed.

## Claims

1. A suspension member (100) of a cryogenic storage tank (500), the suspension member (100) being configured to extend between a portion of an inner tank (510) and a portion of an outer tank (520) of the cryogenic storage tank (500) to thereby suspend a portion of the inner tank (510) within the outer tank (520),
wherein the suspension member (100) comprises :
a plurality of fibres (110) which are aligned along an elongate axis of the suspension member (100);
a first attachment member (210) for attaching a first end of the fibres (110) to the inner tank (510), and
a second attachment member (220) for attaching a second end of the fibres (110) to the outer tank (520).

2. A suspension member (100) as claimed in claim 1 wherein the first and / or second attachment member (210,220) comprises a self-tightening attachment (230,242).

3. A suspension member (100) as claimed in claim 2 wherein the self-tightening attachment comprises a wedge (230) and tapered passageway (242) which is complimentary in shape to the wedge (230), wherein the fibres (110) are arrangeable between the wedge (230) and tapered passageway (242) such that a tensile force applied to the fibres (110) causes the wedge (230) to be urged towards the tapered passageway (242).

4. A suspension member (100) as claimed in claim 3, wherein the wedge (230) and tapered passageway (242) are configured such that the fibres (110) can be uniformly distributed between the wedge (230) and tapered passageway (242).

5. A suspension member (100) as claimed in claim 3 or claim 4, wherein, the tapered passageway (242) is formed through a body (240), the body (240) having a mouth (244), through which the fibres (110) are insertable into the tapered passageway (242).

6. A suspension member (100) as claimed in claim 5, wherein the body (240) is connectable to a mounting member (300) by means of an axially adjustable attachment (310).

7. A suspension member (100) as claimed in claim 6, wherein the axially adjustable attachment (310) comprises a threaded connection.

8. A suspension member (100) as claimed in claim 6 or claim 7, wherein the axially adjustable attachment (310) comprises a coupling (302) threadably connectable to the body (240) and mounting member (300), wherein the threadable connection comprises a first connection between the coupling (302) and body (240) having threads in a first direction, and a second connection between the coupling (302) and mounting member (300) having threads in a second direction.

9. A suspension member (100) as claimed in any one of claims 6 to 8, wherein the mounting member (300) is attachable to the inner (510) or outer tank (520) by means of a further attachment comprising a plate (324) on the mounting member (300) or inner /outer tanks (510, 520), the plate (324) being insertable into a slot (322) in the other of the mounting member (300) or inner/outer tank (510, 520), and being securable by a pin (326) through an aperture (328) that extends through both the slot (322) and plate (324).

10. A suspension member (100) as claimed in any one of claims 3 to 9, wherein the wedge (230) is substantially conical or frustoconical in shape, and a centreline of the wedge (230) is aligned to the elongate axis and wherein the tapered passageway (242) has a surface which is inclined to the elongate axis at substantially the same angle as the surface of the wedge (230).

11. A method of assembling a suspension member (100) of a cryogenic storage tank (500), the suspension member (100) being configured to extend between a portion of an inner tank (510) and a portion of an outer tank (520) of the cryogenic storage tank (500), to thereby suspend a portion of the inner tank (510) within the outer tank (520), wherein the method comprises the steps of:
arranging a plurality of fibres (110) such that they are aligned along an elongate axis of the suspension member (100);
attaching a first attachment member (210), for attaching a first end of the fibres (110) to the inner tank (510), to a first end of the fibres (110); and
attaching a second attachment member (220), for attaching a second end of the fibres (110) to the outer tank (520), to a second end of the fibres (110).

12. A method as claimed in claim 11, wherein at least one of the attachment members comprises a self-tightening attachment, and the method includes a step of attaching the self-tightening attachment by inserting the plurality of fibres (110) through a mouth (244) of a body (240) of the attachment and into a tapered passageway (242), thereafter a wedge (230) is inserted into an opposite end of the body (240), and is pressed towards the tapered passageway (242) with the fibres (110) arranged between the tapered passageway (242) and the wedge (230).

13. A cryogenic storage tank (500) comprising an inner tank (510) and outer tank (520),
wherein the inner tank (510) is suspended within the outer tank (520) by means of one or more suspension members (100) which extend between the inner (510) and outer tank (520), and
the or each suspension member (100) comprises :
a plurality of fibres (110) which are aligned along an elongate axis of the suspension member (100);
a first attachment member (210) for attaching a first end of the fibres (110) to the inner tank (510); and
a second attachment member (220) for attaching a second end of the fibres (110) to the outer tank (520).

14. A cryogenic storage tank (500) as claimed in claim 13, wherein :
the or each suspension member(s) (100) are arranged to extend in a radial direction from the inner tank (510), from proximate a central axis (106) of the inner tank (510), to a side wall of the outer tank (520);
the suspension members (100) extend from a trunnion (600), which extends outwardly from the first and / or second end (512, 516) of the inner tank (510);
the trunnion (600) being co-axial with the central axis (106) of the cryogenic tank (500);
a first group of suspension members (100) extend from a first end (512) of the inner tank (510) to the outer tank (520);
a second group of suspension members (100) extend from a second end (516) of the inner tank (510) to the outer tank (520).

15. A method of assembling a cryogenic storage tank (500) comprising an inner tank (510) and outer tank (520),
wherein the method comprises arranging one or more suspension members (100) to extend between the inner (510) and outer tank (520) to thereby suspend the inner tank (510) within the outer tank (520),
wherein the suspension members (100) are assembled in accordance with the method of claims 11 to 12.
